(19) Europäisches Patentamt
European Patent Office
Office européen des brevets

(11) **EP 4 567 922 A1**

(12) **EUROPEAN PATENT APPLICATION**
published in accordance with Art. 153(4) EPC

(43) Date of publication:
**11.06.2025 Bulletin 2025/24**

(21) Application number: **23886361.7**

(22) Date of filing: **03.11.2023**

(51) International Patent Classification (IPC):
*H01M 4/36* (2006.01)    *H01M 4/587* (2010.01)
*H01M 4/38* (2006.01)    *H01M 10/052* (2010.01)
*H01M 4/02* (2006.01)

(52) Cooperative Patent Classification (CPC):
H01M 4/02; H01M 4/36; H01M 4/38; H01M 4/587;
H01M 10/052

(86) International application number:
**PCT/KR2023/017507**

(87) International publication number:
**WO 2024/096667 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 KR 20220146309**

(71) Applicant: **LG Energy Solution, Ltd.**
**Seoul 07335 (KR)**

(72) Inventors:
• **KIM, Na Yoon**
**Daejeon 34122 (KR)**
• **HAN, Dakyung**
**Daejeon 34122 (KR)**
• **JUNG, Yi Jin**
**Daejeon 34122 (KR)**
• **LEE, Dong Chan**
**Daejeon 34122 (KR)**
• **CHOI, Ran**
**Daejeon 34122 (KR)**
• **KIM, Sulcham**
**Daejeon 34122 (KR)**
• **YOM, Jeeho**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ALL-SOLID-STATE LITHIUM ION SECONDARY BATTERY**

(57) An all-solid-state lithium ion secondary battery is disclosed, wherein the lithium-free negative electrode of the all-solid-state battery can include two or more carbon materials having different particle sizes to increase the contact area with the solid electrolyte. The all-solid-state lithium ion secondary battery includes a positive electrode, a solid electrolyte layer, a negative electrode current collector, and a negative electrode active material layer disposed between the solid electrolyte layer and the negative electrode current collector, wherein the negative electrode active material layer includes a first carbon material; a second carbon material; and Ag; wherein the first carbon material and the second carbon material have different average particle sizes.

[Figure 5]

**Description**

[Technical Field]

The present application claims the benefit and priority to Korean Patent Application No. 10-2022-0146309, filed November 4, 2022, and Korean Patent Application No. 10-2023-0150694, filed November 3, 2023, the disclosure of which is incorporated herein by reference in its entirety.

The present invention relates to an all-solid-state lithium ion secondary battery comprising a lithium-free negative electrode, and more particularly to an all-solid-state lithium ion secondary battery wherein the lithium-free negative electrode of the all-solid-state battery includes two or more carbon materials having different particle sizes to increase the contact area with the solid electrolyte.

[Background Art]

Various batteries are being researched to overcome the limitations of the current widely commercialized lithium ion batteries in terms of capacity, safety, power output, enlargement and microminiaturization. For example, metal-air batteries which have a very large theoretical capacity compared to lithium ion batteries, all-solid-state batteries which do not have the risk of explosion compared to lithium ion batteries, super capacitors in terms of the power output, sodium-sulfur batteries (NaS batteries) or redox flow batteries (RFBs) in terms of enlargement, and thin film batteries in terms of microminiaturization are being continuously researched in academia and industry.

Among them, all-solid-state batteries are batteries in which the electrolyte used in lithium secondary batteries is replaced from a liquid to a solid, and as a result, safety can be greatly improved by not using flammable solvents, so that ignition or explosion caused by decomposition reactions of conventional electrolytes does not occur at all. In addition, all-solid-state batteries have the advantage of being able to dramatically improve the energy density relative to the mass and volume of the battery because lithium metal or lithium alloys can be used as the negative electrode active material. In addition, the capacity density (capacity per unit weight) of lithium is about 10 times that of graphite, which is commonly used as a negative electrode active material. Therefore, using lithium as a negative electrode active material makes it possible to increase the power output of an all-solid-state battery while thinning the battery out.

As a conventional all-solid-state battery, a battery having a metal layer formed of a metal alloyed with lithium as a negative electrode active material layer and an interfacial layer composed of amorphous carbon on the negative electrode active material layer is known. In this type of all-solid-state battery, metallic lithium is precipitated between the amorphous carbon interfacial layer and the negative electrode active material layer during charging, and the precipitated metallic lithium is ionized and moved to the positive electrode during discharging. However, if the all-solid-state battery as described above is repeatedly charged and discharged, the metal lithium precipitated between the amorphous carbon interfacial layer and the negative electrode active material layer may be ionized and dissolved, forming pores that cause the problem that it cannot be used as a battery.

To compensate for this problem, all-solid-state batteries with a negative electrode composed of carbon and silver (Ag) (i.e., a lithium-free negative electrode), excluding the lithium metal layer, have been developed in the industry. However, in this case, due to the large pores between the carbon materials, the contact area between the negative electrode and the solid electrolyte is small even with warm isostatic pressing (WIP), making it difficult to maximize the performance of the battery.

In other words, because all-solid-state batteries use only solid materials, good performance can be achieved by lowering resistance only when good contact between electrodes and electrolytes is achieved. Therefore, isostatic pressurization is carried out to reduce pores and increase the contact area of the electrode and the electrolyte after the battery is manufactured. However, the known lithium-free negative electrodes for all-solid-state batteries have large pores between the carbon materials, and the contact area with the solid electrolyte is insufficient even with isostatic pressurization. Therefore, there is a need for a method to reduce the porosity of the lithium-free negative electrode before isostatic pressurization, and to further reduce the porosity after isostatic pressurization to increase the contact area with the solid electrolyte layer.

[Disclosure]

[Technical Problem]

Accordingly, it is an object of the present invention to provide an all-solid-state lithium ion secondary battery, wherein the lithium-free negative electrode of the all-solid-state battery includes two or more carbon materials with different particle sizes to increase the contact area with the solid electrolyte.

[Technical Solution]

To achieve the above objective, the present invention provides an all-solid-state lithium ion secondary battery comprising a positive electrode, a solid electrolyte layer, a negative electrode current collector, and a negative electrode active material layer disposed between the solid electrolyte layer and the negative electrode current collector, wherein the negative electrode active material layer comprises a first carbon material; a second carbon material; and Ag, where the first carbon material and the second carbon material have different average particle sizes.

[Effects of the Invention]

According to the all-solid-state lithium ion secondary battery according to the present invention, the lithium-free negative electrode of the all-solid-state battery has the advantage of including two or more carbon materials with different particle sizes to increase the contact area with the solid electrolyte.

[Description of Drawings]

FIG. 1 is a cross-sectional schematic illustration of the configuration of an all-solid-state lithium ion secondary battery according to one embodiment of the present invention.
FIG. 2 is a cross-sectional schematic illustration of the configuration of an all-solid-state lithium ion secondary battery according to one embodiment of the present invention.
FIG. 3 is a cross-sectional schematic illustration of the distribution of active material in a negative electrode for an all-solid-state battery manufactured in accordance with one embodiment of the present invention.
FIG. 4 is a cross-sectional schematic illustration of the distribution of active material in the negative electrode of a conventional all-solid-state battery.
FIG. 5 is a graph showing the results of measuring the porosity before and after isostatic pressurization for each of the negative electrodes according to one embodiment and a comparative example of the present invention.
FIG. 6 is a scanning electron microscope (SEM) image of the surface of each of the negative electrodes according to one embodiment and a comparative embodiment of the present invention.
FIG. 7 is a 3D laser confocal microscopy image of the surface of each of the negative electrodes according to one embodiment and a comparative embodiment of the present invention.
FIG. 8 is a graph showing the performance of a battery according to one embodiment and a comparative embodiment of the present invention.

[Best Mode]

Hereinafter, the present invention is described in detail.
The all-solid-state lithium ion secondary battery according to the present invention comprises a positive electrode, a solid electrolyte layer, a negative electrode current collector, and a negative electrode active material layer disposed between the solid electrolyte layer and the negative electrode current collector, wherein the negative electrode active material layer comprises a first carbon material, a second carbon material, and Ag, wherein the first carbon material and the second carbon material have different average particle sizes.
All-solid-state batteries have the advantage of excellent energy density and safety. A typical example of such all-solid-state batteries is an all-solid-state battery that includes a metal layer formed by a metal alloyed with lithium as the negative electrode active material layer and an interfacial layer composed of amorphous carbon on the negative electrode active material layer, and an all-solid-state battery that overcomes the above disadvantage which has a negative electrode composed of carbon and silver (Ag) without a lithium metal layer (i.e., a lithium-free negative electrode). However, in the latter case, due to the large pores between the carbon materials, the contact area between the negative electrode and the solid electrolyte is small even with warm isostatic pressing (WIP), and it is not easy to maximize the performance of the battery. Therefore, the applicant of the present invention has invented an all-solid-state Lithium ion secondary battery that can reduce the porosity of the lithium-free negative electrode before isostatic pressurization, and further reduce the porosity after isostatic pressurization to increase the contact area with the solid electrolyte layer.

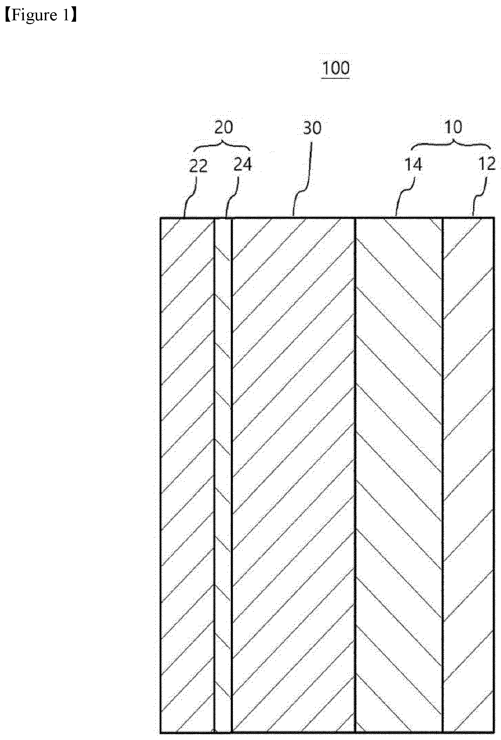

FIG. 1 is a cross-sectional schematic illustration of the configuration of an all-solid-state Lithium ion secondary battery according to one embodiment of the present invention. The all-solid-state lithium ion secondary battery (100) according to one embodiment of the present invention is a so-called lithium ion secondary battery that charges and discharges by transferring lithium ions between the positive electrode (10) and the negative electrode (20). Specifically, the all-solid-state Lithium ion secondary battery (100) comprises a positive electrode (10), a negative electrode (20), and a solid electrolyte layer (30) disposed between the positive electrode (10) and the negative electrode (20), as shown in FIG. 1.

Hereinafter, each of these components is described, and in particular, the negative electrode (20), which is a key feature of the present invention, is described in more detail.

(1) Positive electrode

As shown in FIG. 1, the positive electrode (10) includes a positive electrode active material layer (14) and a positive electrode current collector (12) sequentially disposed in the direction of the negative electrode (20). The positive electrode current collector (12) may be plate-shaped or foil-shaped. The positive electrode current collector (12) may be one metal or an alloy of two or more metals selected from, for example, indium, copper, magnesium, stainless steel, titanium, iron, cobalt, nickel, zinc, aluminum, germanium, and lithium.

The positive electrode active material layer (14) may reversibly adsorb and release lithium ions. Further, the positive electrode active material layer (14) may comprise a positive electrode active material and further comprise a solid electrolyte. The positive electrode active material may be a compound capable of inserting/removing lithium. Examples of compounds in which lithium can be inserted or removed include $Li_aA_{1-b}B'_bD'_2$ (wherein $0.90 \leq a \leq 1.8$, and $0 < b \leq 0.5$); $Li_aE_{1-b}B'_bO_{2-c}D'_c$ (wherein $0.90 \leq a \leq 1.8$, $0 < b \leq 0.5$, and $0 \leq c \leq 0.05$); $LiE_{2-b}B'_bO_{4-c}D'_c$ (wherein $0 < b \leq 0.5$, and $0 \leq c \leq 0.05$); $Li_aNi_{1-b-c}Co_bB'_cD'_\alpha$ (wherein $0.90 \leq a \leq 1.8$, $0 < b \leq 0.5$, $0 \leq c \leq 0.05$, and $0 < \alpha \leq 2$); $Li_aNi_{1-b-c}Co_bB'_cO_{2-\alpha}F'_\alpha$ (wherein $0.90 \leq a \leq 1.8$, $0 < b \leq 0.5$, $0 \leq c \leq 0.05$, and $0 < \alpha < 2$); $Li_aNi_{1-b-c}Mn_bB'_cD'_\alpha$ (wherein $0.90 \leq a \leq 1.8$, $0 < b \leq 0.5$, $0 \leq c \leq 0.05$, and $0 < \alpha < 2$); $Li_aNi_{1-b-c}Mn_bB'_cO_{2-\alpha}F'_\alpha$ (wherein $0.90 \leq a \leq 1.8$, $0 < b \leq 0.5$, $0 \leq c \leq 0.05$, and $0 < \alpha < 2$); $Li_aNi_bE_cG_dO_2$ (wherein $0.90 \leq a \leq 1.8$, $0 < b \leq 0.9$, $0 \leq c \leq 0.5$, and $0.001 \leq d \leq 0.1$); $Li_aNi_bCo_cMn_dG_eO_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1.8$, and $0.001 < b \leq 0.1$); $Li_aCoG_bO_2$ (wherein $0.90 \leq a \leq 1.8$, and $0.001 \leq b \leq 0.1$); $Li_aMnG_bO_2$ (wherein $0.90 \leq a \leq 1.8$, and $0.001 \leq b \leq 0.1$); $Li_aMn_2G_bO_4$ (wherein $0.90 \leq a \leq 1.8$, and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (wherein $0 \leq f \leq 2$); $Li_{(3-f)}Fe_2(PO_4)_3$ (wherein $0 \leq f \leq 2$); and $LiFePO_4$.

In the above formulae, A is Ni, Co, Mn, or a combination thereof, B' is Al, Ni, Co, Mn, Cr, Fe, Mg, Sr, V, a rare earth element, or a combination thereof, D' is O, F, S, P, or a combination thereof, E is Co, Mn, or a combination thereof, F' is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

Specific examples of the positive electrode active materials include lithium cobaltate (LCO), lithium nickelate, lithium nickel cobaltate, lithium nickel cobalt aluminate (NCA), lithium nickel cobalt manganate (NCM), lithium manganate, lithium salts such as lithium iron phosphate, and lithium sulfide. The positive electrode active material layer (14) may include only one selected from these compounds as the positive electrode active material, or two or more selected therefrom.

The positive electrode active material may comprise a lithium salt of a transition metal oxide having a layered rock salt structure among the lithium salts described above. Here, a layered rock salt structure means a structure in which layers of oxygen atoms and layers of metal atoms are arranged alternately and regularly in the direction of a cubic rock salt structure, resulting in each layer of atoms forming a two-dimensional plane. Furthermore, a cubic rock salt structure means a sodium chloride type structure, which is one of the crystal structures. For example, a cubic rock salt structure refers to a structure in which face-centered cubic lattices having cations and anions are arranged with each other offset by 1/2 of the corners of the unit lattice.

The lithium salt of the transition metal oxide having such a layered rock salt-type structure may be, for example, a ternary lithium transition metal oxide such as $LiNi_xCo_yAl_zO_2$ (NCA) or $LiNi_xCo_yMn_zO_2$ (NCM) (wherein $0 < x < 1$, $0 < y < 1$, $0 < z < 1$, and $x + y + z = 1$). The positive electrode active material layer (14) may include a lithium salt of a ternary lithium transition metal oxide having such a layered rock salt-type structure as a positive electrode active material to improve the energy density and thermal stability of the all-solid-state lithium ion secondary battery (100).

The shape of the positive electrode active material may be, for example, a particle shape such as spherical, ellipsoidal, or the like. Furthermore, the particle size of the positive electrode active material is not particularly limited and can be in the range applicable to the positive electrode active material of a conventional all-solid-state lithium ion secondary battery. Furthermore, the content of the positive electrode active material in the positive electrode active material layer (14) is not particularly limited and can be in the range applicable to the positive electrode of a conventional all-solid-state Lithium ion secondary battery.

Also, it is possible to use the compound having a coating layer on the surface, and it is possible to use a mixture of the above compound and the compound having the coating layer. This coating layer may comprise a coating element compound of an oxide or hydroxide of a coating element, an oxyhydroxide of a coating element, an oxycarbonate of a coating element, or a hydroxycarbonate of a coating element. The compounds constituting the coating layer may be amorphous or crystalline. Examples of the coating elements included in the coating layer may include Mg, Al, Co, K, Na, Ca, Si, Ti, V, Sn, Ge, Ga, B, As, Zr, or mixtures thereof, and specific examples of the coating layer may include $Li_2O$-$ZrO_2$. The process of forming the coating layer can be carried out using any coating method (e.g., spray coating, immersion method, etc.) as long as the compound can be coated with these elements in a way that does not adversely affect the properties of the positive electrode active material, which can be easily understood by those skilled in the art, and therefore, the detail thereof is not provided herein.

The solid electrolyte that may be further included in the positive electrode active material layer (14) may be the same as the solid electrolyte included in the solid electrolyte layer (30) described above, or may be different therefrom. In addition, the positive electrode active material layer (14) may be a combination of not only the positive electrode active material and solid electrolyte described above, but also additives such as, for example, a conductive material, binder, filler, dispersant, or ionic conductive auxiliary agent. Such conductive material may include, for example, graphite, carbon black, acetylene black, ketjen black, carbon fiber or metal powder. Additionally, the binder may be mixed with the active material and the conductive material to bind the components together and aid in the growth of the particles, and may be, for example, styrene butadiene rubber (SBR), polytetrafluoroethylene, polyvinylidene fluoride, or polyethylene. Furthermore, the filler, dispersant, or ionic conductive auxiliary agent may be those commonly used for electrodes of all-solid-state lithium ion secondary batteries. In addition, the positive electrode active material layer (14) may include the above positive electrode active material, conductive material and binder in a granular form.

(2) Negative electrode

Next, the negative electrode (20) includes a negative electrode active material layer (24) and a negative electrode current collector (22) sequentially disposed in the direction of the positive electrode (10). The negative electrode current collector (22) may be plate-like or foil-like. The negative electrode current collector (22) may comprise a material that does not react with lithium, that is, does not form any of the alloys and compounds with lithium. Examples of materials comprising the negative electrode current collector (22) include copper, stainless steel, titanium, iron, cobalt, and nickel. Further, the negative electrode current collector (22) may be composed of one of these metals, or may be composed of an alloy or clad material of two or more metals.

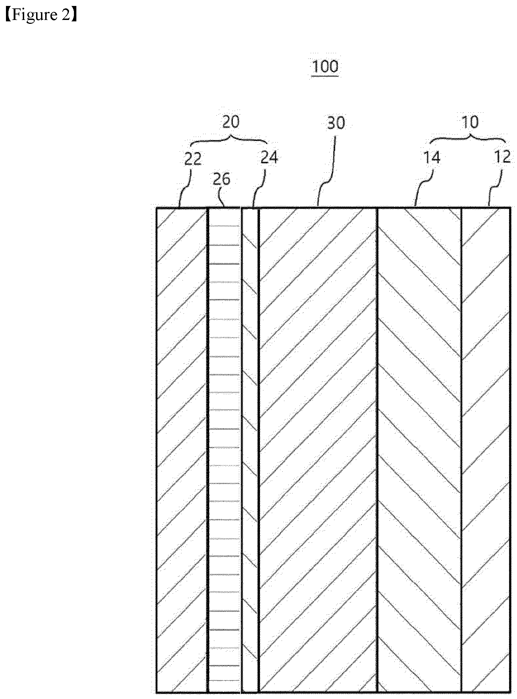

The negative electrode active material layer (24) may include one or two or more types of negative electrode active materials capable of forming alloys or compounds with lithium. In an initial state or after a full discharge, the negative electrode current collector (22), the negative electrode active material layer (24), or the area between the negative electrode active material layer (24) and the solid electrolyte layer (30) may not contain lithium. FIG. 2 is a cross-sectional schematic illustration of the configuration of an all-solid-state lithium ion secondary battery according to one embodiment of the present invention. As described below, when the all-solid-state lithium ion secondary battery (100) according to one embodiment is overcharged, the negative electrode active material contained in the negative electrode active material layer (24) and the lithium ions migrated from the positive electrode (10) may form an alloy or compound, such that, for example, a metallic layer (26) having lithium as a major component may be formed (precipitated) on the negative electrode (20) as shown in FIG. 2. The metal layer (26) may be formed by precipitation between the negative electrode current collector (22) and the negative electrode active material layer (24), within the negative electrode active material layer (24), or both of these positions. When the metal layer (26) is located between the negative electrode current collector layer (22) and the negative electrode active material layer (24), the metal layer (26) may be formed closer to the negative electrode current collector layer (22) than to the negative electrode active material layer (24).

The negative electrode active material layer (24), according to one embodiment of the present invention, includes silver (Ag) as an essential negative electrode active material. Thus, the metal layer (26) formed upon overcharge may comprise a Li(Ag) alloy including a $\gamma 1$ phase, a $\beta$Li phase, or a phase of a combination thereof, in which Ag forms a solid solution in lithium. Thus, upon discharge, only Li may be dissolved in the Li(Ag) alloy constituting the metal layer (26), and the Ag forming a solid solution may be retained to inhibit the development of pores. In this case, the content of Ag in the precipitated Li-Ag solid solution may be 60% by weight or less. In this range, the degradation of the average discharge potential due to the influence of Ag can be effectively suppressed. On the other hand, if the content of Ag in the precipitated Li-Ag solid solution is too small, the amount of Ag remaining during discharge will be small, and it may be difficult to sufficiently suppress the occurrence of pores. For this reason, the content of Ag in the precipitated Li-Ag solid solution may be 20% by weight or more, such as 40% by weight or more.

In one embodiment of the present invention, the Ag is not necessarily uniformly present in the negative electrode active material layer (24), and may be maldistributed in the side of the negative electrode current collector (22) of the negative electrode active material layer (24). In this case, the Li(Ag) alloy may be formed as the metal layer (26) by reacting the lithium ions with the layer in which Ag is maldistributed of the negative electrode active material layer (24) where the lithium ions reach the vicinity of the negative electrode current collector (22).

If the content of Ag contained in the negative electrode active material layer (24) is excessively low, it may be difficult to suppress the occurrence of pores because the amount of Ag remaining at the time of discharge is also reduced. For this reason, the negative electrode active material layer (24) may contain 10% by weight or more, preferably 20% by weight or more, of Ag, based on 100% by weight of the total negative electrode active material contained in the negative electrode active material layer (24), in an initial state in which no charge or discharge has been performed. On the other hand, in the relationship between the reaction potentials of Ag and Li, an increase in Ag may lower the average discharge potential and thus reduce the energy density of the battery. Therefore, in terms of high energy density, the upper limit of the Ag content may be preferably 50% by weight or less, based on 100% by weight of the total negative electrode active material contained in the negative electrode active material layer (24).

Furthermore, if the content of Ag per unit area is excessively low in the negative electrode active material layer (24), as viewed from the stacking direction of the negative electrode (20), it may be difficult to suppress the occurrence of pores because the amount of Ag remaining at the time of discharge is also reduced. Therefore, the content of Ag per unit area in the negative electrode active material layer (24) may be 0.05 mg/cm$^2$ or more, preferably 0.10 mg/cm$^2$ or more. On the other hand, if the content of Ag per unit area is too high, the average discharge potential may be lowered and the energy density of the battery may be reduced. Therefore, the upper limit of the Ag content per unit area may be 5 mg/cm$^2$ or less, preferably 2 mg/cm$^2$ or less.

Furthermore, the Ag contained in the negative electrode active material layer (24) in its initial state without charge and discharge may be in a particulate phase or a film phase. If the Ag is present in the particulate phase, the average particle diameter (d50, diameter length or average diameter) of the Ag may be, but is not limited to, 20 nm to 1 $\mu$m.

Meanwhile, the negative electrode active material layer (24) may comprise a carbon material as a negative electrode active material other than Ag, and may further comprise one or more selected from the group consisting of Au, Pt, Pd, Si, Al, Bi, Sn, In, and Zn, as desired.

Carbon material in the negative electrode active material layer

The negative electrode active material layer (24) comprises two or more carbon materials having different average particle sizes. More specifically, the negative electrode active material layer (24) includes a first carbon material and a second carbon material, wherein the first carbon material and the second carbon material have different average particle sizes (D50).

This is to reduce the pores in the negative electrode active material layer (24) to increase the contact area between the negative electrode (20) and the solid electrolyte layer (30). In other words, if the negative electrode active material layer (24) includes two or more carbon materials with different average particle sizes, the carbon materials with relatively smaller particle sizes are located between those with relatively larger particle sizes, thereby reducing the porosity of the negative electrode active material layer (24) (i.e., improving the density of the negative electrode active material layer) before isostatic pressurization. Furthermore, once isostatic pressurization is achieved in this state, the porosity of the negative electrode active material layer (24) can be further reduced to maximize the increase in contact area with the solid electrolyte layer. Accordingly, the initial charge/discharge efficiency and lifetime performance of the all-solid-state battery can be dramatically improved compared to the conventional cases.

The average particle size ratio of the first carbon material to the second carbon material may be 1 : 1.2 to 4, preferably 1 : 1.5 to 3, more preferably 1 : 1.8 to 2.7. If the ratio of the average particle size of the first carbon material to the average particle size of the second carbon material falls outside of 1 : 1.2 to 4, it may not be possible to achieve the purpose of the present invention, or the effect may be maximized and there may be no further benefit.

For example, the first carbon material may have an average particle size of 5 nm or more and less than 50 nm, and the second carbon material may have an average particle size of 50 nm or more and 90 nm or less. Furthermore, it may be more preferable that the first carbon material has an average particle size of 25 nm to 45 nm and the second carbon material has an average particle size of 60 nm to 85 nm. In particular, since it is impossible to achieve the purpose of the present invention if the negative electrode active material layer (24) includes a carbon material having an average particle size of 100 nm or more, it is preferable that both the first carbon material and the second carbon material have an average particle size of tens of nanometers. In other words, the negative electrode active material layer (24) does not include a carbon material having an average particle size of 100 nm or more.

Further, the average particle size difference between the first carbon material and the second carbon material may be 10 nm to 50 nm, preferably 20 nm to 45 nm, more preferably 30 nm to 40 nm. If the average particle size difference between the first carbon material and the second carbon material is less than 10 nm, it may be difficult to maximize the benefits of the average particle size difference, and if it exceeds 50 nm, there may be no further benefit.

Furthermore, the content ratio of the first carbon material and the second carbon material may be 2 : 8 to 8 : 2, preferably 1 to 4 : 1 by weight. If the content ratio of the first carbon material and the second carbon material falls outside of 2 : 8 to 8 : 2 by weight, the degree of reduction of the porosity of the negative electrode active material layer (24) may be insignificant or no longer beneficial. Furthermore, based on 100% by weight of the total negative electrode active material contained in the negative electrode active material layer (24), the content of the remaining negative electrode active material other than Ag may be 50% by weight or more, preferably 70% by weight or more.

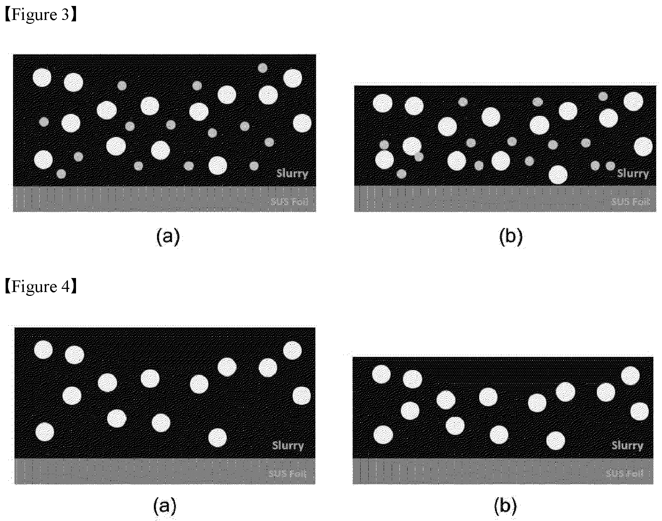

On the other hand, two or more carbon materials with different average particle sizes may be included in the negative electrode active material layer (24) in such a way that the carbon materials are mixed with each other and the carbon materials with relatively small particle size are located between the carbon materials with relatively large particle size, as shown in FIG. 3. In this case, the entire negative electrode active material layer (24) has uniform and fine pores, resulting in a high overall density.

However, in the negative electrode active material layer (24), only a carbon material having a relatively small particle size (i.e., a first carbon material) is located alone on the side of the interface with the solid electrolyte layer (30), so that the interface of the negative electrode active material layer (24) with the solid electrolyte layer (30) can be further flattened. Therefore, in this case, the negative electrode active material layer (24) can be divided into a first negative electrode active material layer in which only the first carbon material is located alone, and a second negative electrode active material layer in which the first carbon material and the second carbon material are mixed. Of course, the first negative electrode active material layer and the second negative electrode active material layer may each contain Ag. In other words, the negative electrode active material layer (24) may include a first negative electrode active material layer comprising a first carbon material and Ag; and a second negative electrode active material layer comprising a first carbon material, a second carbon material, and Ag. Among the first negative electrode active material layer and second negative electrode active material layer, the first negative electrode active material layer contacts the solid electrolyte layer (30).

Here, the thickness ratio of the first negative electrode active material layer and the second negative electrode active material layer may be 1 : 5 to 1 : 10, preferably 1 : 7 to 1 : 10. Here, the thickness of the first negative electrode active material layer refers to the thickness of the thinnest part from the interface of the negative electrode active material layer (24) in contact with the solid electrolyte layer (30) to the contact with the second negative electrode active material layer. Furthermore, the thickness of the second negative electrode active material layer means the thickness of the thickest part from the contact with the negative electrode current collector (22) to the contact with the first negative electrode active material layer.

The first carbon material and the second carbon material may be homogeneous or heterogeneous. Further, it is preferred that the first carbon material and the second carbon material are each amorphous carbon that does not have a crystalline structure. More specifically, the first carbon material and the second carbon material may each independently be amorphous carbon black, amorphous acetylene black, amorphous furnace black, amorphous ketjen black, amorphous activated carbon, amorphous graphene, or combinations thereof. Thus, the first carbon material and the second carbon material may include, for example, an amorphous carbon black having an average particle size of 5 nm or more and less than 30 nm and an amorphous carbon black having an average particle size of 30 nm or more and 90 nm or less. Further, the first carbon material and the second carbon material may include, for example, amorphous furnace black having an average particle size of 5 nm or more and less than 30 nm and amorphous graphene having an average particle size of 30 nm or more and 90 nm or less.

Furthermore, the first carbon material and the second carbon material may each independently comprise at least one of point-like particles having an aspect ratio of 1 to 2 and linear particles having an aspect ratio greater than 2. However, it is preferred that both the first carbon material and the second carbon material are point-like particles having an aspect ratio of 1 to 2, and even more preferred that they are point-like particles having an aspect ratio converging to 1, so that the carbon materials having a relatively small particle size (e.g., the first carbon material) can be distributed smoothly and uniformly between the carbon materials having a relatively large particle size (e.g., the second carbon material).

Although the negative electrode active material layer (24) is described above as comprising a first carbon material and a second carbon material having different average particle sizes, it is obvious that the negative electrode active material layer (24) may additionally comprise several other carbon materials having different average particle sizes from the first carbon material and the second carbon material.

Meanwhile, each of the two or more carbon materials having different average particle sizes included in the negative electrode active material layer (24) may comprise oxygen. More specifically, each carbon material particle comprising the carbon material may comprise 2 to 10 at% oxygen. When the oxygen is included in the range of 2 to 10 at%, the surface roughness of the negative electrode active material layer and the driving characteristics of the battery may be further improved.

In one embodiment of the present invention, the oxygen may be present in a form incorporated into a functional group bonded to the carbon material particle. Further, the functional group may comprise one or more selected from the group consisting of carboxylic groups, hydroxyl groups, ethers, esters, aldehyde groups, carbonyl groups, and amide groups.

The carbon material particles comprising 2 to 10 at% oxygen may be prepared, for example, by oxidizing the carbon material. In one embodiment of the present invention, oxygen functional groups can be introduced to the surface of the carbon material by treating the carbon material with an acid, and stirring and reacting at a temperature of 25 to 60 °C. The type of acid is not particularly limited and can be any acid capable of introducing oxygen functional groups to the surface of the carbon material. The acid may be, for example, sulfuric acid, nitric acid, or a mixture thereof, and an oxidizing agent such as potassium permanganate may also be used.

The content of oxygen in the carbon material particle can be measured using photoelectron spectroscopy (XPS or ESCA). For example, it may be measured using a K-Alpha (Thermo Fisher Scientific) device. In one embodiment of the present invention, the oxygen may be present on a surface of the carbon material particle. The surface does not necessarily mean the outer surface of the carbon material particle, but includes, for example, the inner surface of the pores, if pores are present.

If the carbon material comprises oxygen as described above, the negative electrode active material layer (24) may comprise 2 to 10 at% oxygen, 65 to 85 at% carbon and 0.5 to 5 at% Ag, preferably 2.5 to 5 at% oxygen, 74 to 85 at% carbon and 0.5 to 3 at% Ag. Furthermore, the negative electrode active material layer (24) may further comprise 5 to 25 at%, preferably 10 to 20 at%, of fluorine (F). Moreover, the negative electrode active material layer (24) may further comprise 0.01 to 1 at%, preferably 0.01 to 0.5 at%, of sulfur (S). In one embodiment of the present invention, the negative electrode active material layer (24) may comprise 2 to 10 at% oxygen, 65 to 85 at% carbon, 0.5 to 5 at% Ag and 5 to 25 at% fluorine, preferably 2.5 to 5 at% oxygen, 74 to 85 at% carbon, 0.5 to 3 at% Ag and 10 to 20 at% fluorine, and may further comprise sulfur. The above atomic composition ratios may be measured using photoelectron spectroscopy (XPS or ESCA). For example, the above ratios may be measured using a Nexsa4 (Thermo Fisher Scientific) apparatus.

The negative electrode active material layer (24) may further comprise a binder for the purpose of stabilizing the negative electrode active material layer (24) on the negative electrode current collector (22). The binder may be, for example, a resin such as styrene butadiene rubber (SBR), polytetrafluoroethylene, polyvinylidene fluoride, or polyethylene. In addition, the negative electrode active material layer (24) may be suitably formulated with additives used in conventional all-solid-state batteries, such as fillers, dispersants, or ionic conductive auxiliary agents. Specific examples of the additives are as described above for the positive electrode.

The total thickness of the negative electrode active material layer (24) is not particularly limited and may be, for example, 1 to 100 $\mu$m. If the thickness of the negative electrode active material layer (24) is less than 1 $\mu$m, the performance of the all-solid-state battery may be insufficient. Furthermore, if the thickness of the negative electrode active material layer (24) exceeds 100 $\mu$m, the resistance of the negative electrode active material layer (24) may increase, and consequently, the performance of the all-solid-state battery may be insufficient. For reference, the thickness of the negative electrode active material layer (24) can be easily secured to an appropriate level by using the aforementioned binder.

The negative electrode current collector (22) may further include a film comprising a material capable of forming an alloy or compound with lithium, which may be disposed between the negative electrode current collector (22) and the negative electrode active material layer (24). The negative electrode current collector (22) may not react with lithium metal, but may make it difficult to precipitate a smooth layer of lithium metal on top. Further, the film may also be utilized as a wetting layer to allow the lithium metal to precipitate smoothly on top of the negative electrode current collector (22).

Materials capable of forming alloys with the lithium metal used in the film may include silicon, magnesium, aluminum, lead, silver, tin, or combinations thereof. Materials capable of forming compounds with the lithium metal used in the film may include carbon, titanium sulfide, iron sulfide, or combinations thereof. The content of the materials used in the film may be in a small amount without affecting the electrochemical properties of the electrode and/or the redox potential of the electrode. The film may be applied flatly on the negative electrode current collector (22) to prevent cracking during the charge cycle of the all-solid-state battery. The application of the film may be by physical deposition, such as evaporation or sputtering, chemical deposition, or plating. The thickness of the film may be, for example, 1 to 500 nm. The thickness of the film may be, for example, 2 to 400 nm. The thickness of the film may be, for example, 3 to 300 nm. The thickness of the film may be, for example, 4 to 200 nm. The thickness of the film may be, for example, 5 to 100 nm.

(3) Solid electrolyte layer

The solid electrolyte layer (30) is disposed between the positive electrode (10) and the negative electrode (20) (e.g., between the positive electrode active material layer (14) and the negative electrode active material layer (24)), and includes a solid electrolyte capable of moving ions. The solid electrolyte may comprise one or more selected from a sulfide-based solid electrolyte, a polymer-based solid electrolyte, and an oxide-based solid electrolyte, and may preferably comprise only a sulfide-based solid electrolyte.

The sulfide-based solid electrolyte may include $Li_2S$-$P_2S_5$, $Li_2S$-$P_2S_5$-LiX (wherein X is a halogen atom), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are positive numbers, Z is any one of Ge, Zn and Ga), $Li_2S$-$GeS_2$, $Li_2S$-$SiS_2$-$Li_3PO_4$, $Li_2S$-$SiS_2$-$Li_pMO_q$ (wherein p and q are positive numbers, M is any one of P, Si, Ge, B, Al, Ga and In), or combinations thereof. The sulfide-based solid electrolyte may include a solid electrolyte represented by Formula 1 below.

$$[\text{Formula 1}] \qquad Li_xM'_yPS_zA_w,$$

wherein x, y, z and w are independently at least 0 and no more than 6, M' is at least one selected from As, Ge, Ga, Sb, Si, Sn, Al, In, Ti, V, Nb and Ta, and A is at least one selected from F, Cl, Br and I.

As the solid electrolyte, the sulfide solid electrolyte material including sulfur (S), phosphorus (P) and lithium (Li) can be utilized. For example, a composition including $Li_2S-P_2S_5$ can be utilized. When utilizing a sulfide-based solid electrolyte material comprising $Li_2S-P_2S_5$, a mixing molar ratio of $Li_2S$ and $P_2S_5$ may be selected in the range of, for example, 50 : 50 to 90 : 10. Further, the solid electrolyte may be in an amorphous state, a crystalline state, or a mixture of amorphous and crystalline states. Further, the solid electrolyte layer (30) may further comprise a binder. The binder may be, for example, a resin such as styrene butadiene rubber (SBR), polytetrafluoroethylene, polyvinylidene fluoride, polyethylene, or polyacrylic acid. The binder may be the same or different from the binder that may be included in the positive electrode active material layer (14) and the negative electrode active material layer (24), respectively.

Initial charge capacity ratio

Further, the all-solid-state lithium ion secondary battery (100) according to one embodiment of the present invention may be configured with an excess of the initial charge capacity of the positive electrode active material layer (14) relative to the initial charge capacity of the negative electrode active material layer (24). As described below, the all-solid-state lithium ion secondary battery (100) according to one embodiment can be charged beyond the initial charge capacity of the negative electrode active material layer (24). At the beginning of charging, lithium may be adsorbed in the negative electrode active material layer (24), that is, the negative electrode active material may form an alloy or compound with lithium ions that have migrated from the positive electrode (10). When charging is performed beyond the initial charging capacity of the negative electrode active material layer (24), lithium may precipitate from the back side of the negative electrode active material layer (24), that is, between the negative electrode current collector (22) and the negative electrode active material layer (24), and a metal layer (26) may be formed by this lithium, as shown in FIG. 2. The metal layer (26) may consist primarily of Ag forming a solid solution in lithium (i.e., Ag-Li solid solution). It may consist of a negative electrode active material, for example, a material forming an alloy or compound with lithium. Upon discharge, the lithium in the negative electrode active material layer (24) and metal layer (26) may be ionized and migrated to the side of the positive electrode (10), leaving the Ag in lithium. Thus, lithium can be used as the negative electrode active material in the all-solid-state Lithium ion secondary battery (100). Furthermore, since the negative electrode active material layer (24) coats the metal layer (26), it can function as a protective layer for the metal layer (26) and inhibit the precipitation and growth of dendritic metallic lithium.

The all-solid-state lithium ion secondary battery (100) according to one embodiment of the present invention preferably has a ratio (b/a) of the initial charge capacity of the positive electrode active material layer (14) to the initial charge capacity of the negative electrode active material layer (24) that satisfies the following formula.

$$[\text{Formula 1}]$$

$$0.01 < b/a < 0.5$$

In Formula 1, a is the initial charge capacity (mAh) of the positive electrode active material layer (14), and b is the initial charge capacity (mAh) of the negative electrode active material layer (24).

If the initial charge capacity ratio is 0.01 or less, the negative electrode active material layer (24) may not function sufficiently as a protective layer, and the characteristics of the all-solid-state lithium ion secondary battery (100) may be degraded. For example, if the thickness of the negative electrode active material layer (24) is very thin, the capacity ratio may be 0.01 or less. In this case, the negative electrode active material layer (24) may collapse by repeated charge and discharge, and dendritic metallic lithium may precipitate and grow. As a result, the characteristics of the all-solid-state lithium ion secondary battery (100) may be degraded. On the other hand, if the initial charge capacity ratio is 0.5 or more, the battery capacity may decrease because the amount of lithium precipitation in the negative electrode decreases.

Method of preparing an all-solid-state lithium ion secondary battery

Next, a method of manufacturing the all-solid-state lithium ion secondary battery (100) is provided. The all-solid-state lithium ion secondary battery (100) according to one embodiment of the present invention may be manufactured by preparing the positive electrode (10), the negative electrode (20), and the solid electrolyte layer (30), respectively, and then stacking them.

First, in the process of manufacturing a positive electrode, the material constituting the positive electrode active material layer (14) (positive electrode active material, binder, etc.) is added to a non-polar solvent to prepare a slurry (or paste), and then the prepared slurry is applied to the positive electrode current collector (12) and dried to obtain a laminate. The laminate may then be pressurized, for example, hydrostatically, to produce the positive electrode (10). **In** this case, the pressurization process may be omitted.

Next, the process of manufacturing a negative electrode comprises adding the materials constituting the negative electrode active material layer (24) (a negative electrode active material comprising two or more carbon materials with different average particle sizes and Ag, a binder, and the like) to a polar solvent or a non-polar solvent to prepare a slurry (or a paste), and then applying the prepared slurry to the negative electrode current collector (22) and drying it to obtain a laminate. The laminate may then be pressurized, for example, hydrostatically, to produce the negative electrode (20). In this case, the pressurization process may be omitted. Furthermore, the method of applying the slurry to the negative electrode current collector (22) is not particularly limited, and may include, for example, screen printing, metal mask printing, electrostatic painting, dip coating, spray coating, roll coating, doctor blading, or gravure coating.

Next, the solid electrolyte layer (30) can be prepared using a solid electrolyte including, for example, a sulfide-based solid electrolyte material. First, a starting material (e.g., $Li_2S$ or $P_2S_5$) is processed by a melt quenching method or a mechanical milling method to obtain a sulfide-based solid electrolyte material. For example, when the melt quenching method is used, the starting materials are mixed in a predetermined amount, pelletized, reacted at a predetermined reaction temperature in a vacuum, and then quenched to produce a sulfide-based solid electrolyte material. Further, the reaction temperature of the mixture of $Li_2S$ and $P_2S_5$ may be 400 °C to 1000 °C, such as 800 °C to 900 °C. Further, the reaction time may be from 0.1 hour to 12 hours, for example, 1 hour to 12 hours. Further, the quenching temperature of the reactant may be 10 °C or less, for example, 0 °C or less, and the quenching rate may be typically 1 °C /sec ~10000 °C /sec, for example, 1 °C /sec ~ 1000 °C /sec. Furthermore, when the mechanical milling method is used, the sulfide-based solid electrolyte material can be prepared by stirring and reacting the starting material using a ball mill. Moreover, the stirring speed and stirring time of the mechanical milling method are not particularly limited, but the faster the stirring speed, the faster the sulfide-based solid electrolyte material can be produced, and the longer the stirring time, the higher the conversion rate of the raw material to the sulfide-based solid electrolyte material.

The obtained mixed raw material (sulfide-based solid electrolyte material) is then subjected to heat treatment at a predetermined temperature, and then crushed to produce a particle-shaped solid electrolyte. If the solid electrolyte has a glass transition point, it can be changed from amorphous to crystalline by heat treatment. Subsequently, the solid electrolyte obtained by the above method can be formed into a film using a known film forming method, for example, an aerosol positioning method, a cold spray method, or a sputtering method, to produce a solid electrolyte layer (30). Further, the solid electrolyte layer (30) may be prepared by pressurizing the solid electrolyte particles. Further, the solid electrolyte layer (30) may be prepared by mixing a solid electrolyte with a solvent and a binder and then applying, drying, and pressurizing the same.

Finally, a solid electrolyte layer (30) can be disposed between the prepared positive electrode (10) and negative electrode (20), and pressurized, for example, by hydrostatic pressure, to produce an all-solid-state lithium ion secondary battery (100) according to one embodiment of the present invention.

Method of charging an all-solid-state lithium ion secondary battery

Next, a charging method of the all-solid-state lithium ion secondary battery (100) is described. The method of charging the all-solid-state lithium ion secondary battery (100) according to one embodiment of the present invention may be to charge (i.e., overcharge) the all-solid-state lithium ion secondary battery (100) beyond the charging capacity of the negative electrode active material layer (24). At the beginning of charging, lithium may be adsorbed within the negative electrode active material layer (24). Upon charging beyond the charging capacity of the negative electrode active material layer (24), lithium may precipitate from the back side of the negative electrode active material layer (24), i.e., between the negative electrode current collector (22) and the negative electrode active material layer (24), and the lithium may form a metal layer (26) that was not present at the time of manufacture, as shown in FIG. 2. Furthermore, during discharge, lithium in the negative electrode active material layer (24) and the metal layer (26) may be ionized and migrated to the side of the positive electrode (10). Thus, in the all-solid-state lithium ion secondary battery (100) of the present invention, lithium can be used as the negative electrode active material. In addition, since the negative electrode active material layer (24) coats the metal layer (26), it can function as a protective layer for the metal layer (26), while inhibiting the precipitation and growth of dendritic metallic lithium. In this way, short circuit and capacity degradation of the all-solid-state lithium ion secondary battery (100) can be suppressed, and furthermore, the characteristics of the all-solid-state lithium ion secondary battery (100) can be improved.

Furthermore, according to one embodiment of the present invention, the metal layer (26) is not pre-formed, which has the advantage of lowering the manufacturing cost of the all-solid-state lithium ion secondary battery (100). Furthermore, the metal layer (26) is not limited to being formed between the negative electrode current collector (22) and the negative electrode active material layer (24) as shown in FIG. 2, but may also be formed inside the negative electrode active material layer (24). Also, the metal layer (26) may be formed both between the negative electrode current collector (22) and the negative electrode active material layer (24), and on the interior of the negative electrode active material layer (24).

The all-solid-state lithium ion secondary battery (100) of the present invention can be manufactured as a unit cell with a structure of positive electrode/separating film/negative electrode, a bicell with a structure of positive electrode/separating film/negative electrode/separating film/positive electrode, or a stacked cell in which the structure of the unit cell is repeated. Furthermore, the all-solid-state lithium ion secondary battery according to the present invention can be utilized as a semi-solid-state battery by including a liquid electrolyte as needed, in which case it can further include a separate polymeric separating film.

The shape of the all-solid-state lithium ion secondary battery (100) of the present invention is not particularly limited, and may include a coin type, a button type, a sheet type, a stacked type, a cylindrical type, a flat type, or a horn type. It can also be applied to large batteries used in electric vehicles. For example, the all-solid-state lithium ion secondary battery (100) may be used in a hybrid vehicle such as a plug-in hybrid electric vehicle (PHEV). They can also be used in applications that require large amounts of power storage, such as electric bicycles or power tools.

Hereinafter, preferred embodiments are presented to facilitate understanding of the present invention, but it is apparent to those skilled in the art that the following embodiments are only examples of the present invention, and that various changes and modifications are possible within the scope of the present invention and the technical idea, and that such changes and modifications fall within the scope of the appended patent claims.

[Embodiment 1] Preparation of a negative electrode for an all-solid-state battery

First, 3 g of amorphous carbon black with an average particle size of 40 nm, 3 g of amorphous carbon black with an average particle size of 80 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Embodiment 2] Preparation of a negative electrode for an all-solid-state battery

First, 3 g of amorphous carbon black with an average particle size of 40 nm, 3 g of amorphous ketjen black with an average particle size of 80 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Embodiment 3] Preparation of a negative electrode for an all-solid-state battery

First, 4.5 g of amorphous carbon black with an average particle size of 40 nm, 1.5 g of amorphous carbon black with an average particle size of 80 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Embodiment 4] Preparation of a negative electrode for an all-solid-state battery

First, 3 g of amorphous carbon black with an average particle size of 40 nm and an oxygen content of 2.6 at%, 3 g of amorphous carbon black with an average particle size of 80 nm, 2 g of Ag, 9.33 g of PVdF binder (6% solids), and 7.67 g of NMP solution were placed in a Thinky mixer container and mixed 12 times for 3 min at 2,000 rpm. Then, 5 g of additional NMP solution was added and mixed at 2,000 rpm for 3 min for 5 times to prepare the first negative electrode active material slurry, which was then applied to SUS foil and dried.

Next, 1 g of amorphous carbon black with an average particle size of 40 nm and an oxygen content of 2.6 at%, 0.3 g of Ag, 1.5 g of PVdF binder (6% solids), and 2.5 g of NMP solution were added to the Thinky mixer container and mixed 12 times for 3 minutes at 2,000 rpm. Then, 1.5 g of additional NMP solution was added and mixed 5 times for 3 minutes at 2,000 rpm to prepare the second negative electrode active material slurry, which was then applied to the surface of the dried first negative electrode active material slurry and dried to prepare the negative electrode for the all-solid-state battery.

[Comparative Example 1] Preparation of a negative electrode for an all-solid-state battery

First, 6 g of amorphous carbon black with an average particle size of 40 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Comparative Example 2] Preparation of a negative electrode for an all-solid-state battery

First, 6 g of amorphous carbon black with an average particle size of 120 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Comparative Example 3] Preparation of a negative electrode for an all-solid-state battery

First, 3 g of amorphous carbon black with an average particle size of 120 nm, 3 g of amorphous carbon black with an average particle size of 200 nm, 2 g of Ag, 9.33 g of PVdF binder (6% solids), and 7.67 g of NMP solution were placed in a Thinky mixer container and mixed 12 times for 3 minutes at 2,000 rpm. 5 g of additional NMP solution was then added and mixed for 3 minutes at 2,000 rpm for 5 times to prepare the negative electrode active material slurry, which was then applied to SUS foil and dried to prepare the negative electrode for the all-solid-state battery.

[Experimental Example 1] Evaluation of the distribution before and after isostatic pressurization of the negative electrode

The negative electrodes for all-solid-state batteries manufactured in Embodiments 1 to 3 and Comparative Examples 1 and 2 were cut in the stacking direction to observe the distribution of carbon material in the negative electrode active material layer, and the results were modeled and shown in FIGs. 3 and 4 (Ag is not shown to facilitate identification of the distribution between carbon materials). FIG. 3 is a cross-sectional schematic illustration of the distribution of the active material of a negative electrode for an all-solid-state battery manufactured according to one embodiment of the present invention, wherein (a) of FIG. 3 shows the image before isostatic pressurization and (b) of FIG. 3 is the image after isostatic pressurization. FIG. 4 is a cross-sectional schematic illustration of the distribution of the active material of a conventional all-solid-state battery negative electrode, wherein (a) of FIG. 4 is the image before isostatic pressurization and (b) of FIG. 4 is the image after isostatic pressurization.

First, referring to FIG. 4, the distribution of the carbon material in the negative electrode active material layer prepared in Comparative Example 1 or 2 shows that when only one type of carbon material is used, the porosity is large even before isostatic pressurization ((a) of FIG. 4), and the degree of reduction in porosity is minimal even after isostatic pressurization ((b) of FIG. 4). On the other hand, in the carbon material of the negative electrode active material layer prepared in Embodiments 1 to 3, as shown in (a) of FIG. 3, the porosity was significantly reduced before isostatic pressurization, and as shown in (b) of FIG. 3, after isostatic pressurization, not only the overall porosity was further reduced, but also the interface near the solid electrolyte layer became very flat compared to Comparative Examples 1 and 2.

In other words, this is due to the application of carbon materials with relatively large particle size and carbon materials with relatively small particle size as negative electrode active materials, and it can be obviously predicted that the contact area between the negative electrode and the solid electrolyte layer is enlarged, and the performance of the battery can be improved.

[Experimental Example 2] Measurement and evaluation of the porosity of the negative electrode

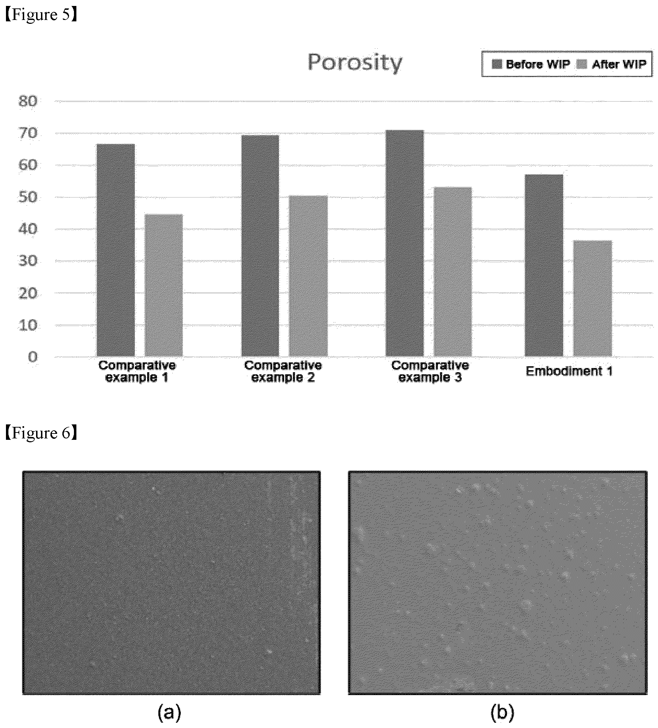

Porosity before and after isostatic pressurization was measured for each of the negative electrodes for all-solid-state batteries prepared in Embodiment 1 and Comparative Examples 1 to 3, and the results are shown in Table 1 below. FIG. 5 is a graph showing the results of measuring the porosity before and after isostatic pressurization for each of the negative electrodes according to one embodiment and comparative examples of the present invention, which is a graphical representation of Table 1 below.

[Table 1]

| | Porosity (%) | | pore reduction (%) |
|---|---|---|---|
| | Before isostatic pressurization | After isostatic pressurization | |
| Embodiment 1 | 57.1 | 36.4 | 36 |
| Comparative example 1 | 66.6 | 44.5 | 33 |

(continued)

| | Porosity (%) | | pore reduction (%) |
| --- | --- | --- | --- |
| | Before isostatic pressurization | After isostatic pressurization | |
| Comparative example 2 | 69.3 | 50.3 | 27 |
| Comparative example 3 | 71 | 53 | 25 |

As can be seen from Table 1 and FIG. 5 above, the porosity decreases by isostatic pressurization in the negative electrodes prepared in Comparative Examples 1 and 2, as in the negative electrodes prepared in Embodiment 1 above. However, in Embodiment 1 using a mixture of two carbon materials, the pore reduction rate by isostatic pressurization was about 36%, which is a relatively high pore reduction rate compared to Comparative Example 1 (pore reduction rate: 33%) and Comparative Example 2 (pore reduction rate: 27%) using only one carbon material.

And most importantly, Embodiment 1, which used a mixture of two carbon materials, exhibited a higher density than Comparative Examples 1 and 2 even before isostatic pressurization, so that even after isostatic pressurization, when pores were reduced, it exhibited a lower porosity than Comparative Examples 1 and 2, which used only one carbon material.

Furthermore, Embodiment 1, which used a mixture of an amorphous carbon black with an average particle size of 40 nm and an amorphous carbon black with an average particle size of 80 nm, showed a lower porosity and a higher porosity reduction rate compared to Comparative Example 3, which used a mixture of an amorphous carbon black with an average particle size of 120 nm and an amorphous carbon black with an average particle size of 200 nm. This shows that even if a mixture of two carbon materials is used, when the average particle size exceeds the level of tens of nanometers, the porosity increases and the contact area with the solid electrolyte decreases.

[Experimental Example 3] Observation of the surface of the negative electrode (1)

The surface (specifically, the surface of the Ag/C layer) of each negative electrode for all-solid-state battery prepared in Embodiment 1 and Comparative Example 2 above was observed by a scanning electron microscope (SEM) (respectively, 100 magnification), and the results are shown in FIG. 6. FIG. 6 is a Scanning Electron Microscope (SEM) image of the surface of each negative electrode according to one embodiment and a comparative example of the present invention, wherein (a) of FIG. 6 is a Scanning Electron Microscope (SEM) image of the surface of the negative electrode of Embodiment 1, and (b) of FIG. 6 is a Scanning Electron Microscope (SEM) image of the surface of the negative electrode of Comparative Example 2.

As a result of the observation, the negative electrode surface of Comparative Example 2 using only one carbon material was observed to have a number of surface protrusions, as shown in (b) of FIG. 6. On the other hand, the negative electrode surface of Embodiment 1 using a mixture of two carbon materials showed a significant improvement in surface protrusions compared to Comparative Example 2, as shown in (a) of FIG. 6.

[Experimental Example 4] Observation of the surface of the negative electrode (2)

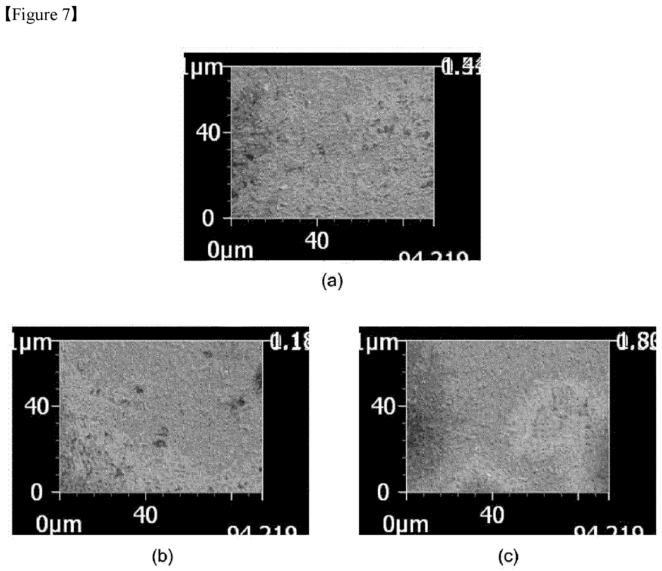

The surface roughness (specifically, the surface of the Ag/C layer) of each negative electrode for all-solid-state battery manufactured in Embodiment 1 and Comparative Examples 1 and 2 above was measured using a 3D laser confocal microscope apparatus (manufactured by KEYENCE), and the results are shown in Table 2 and FIG. 7 below. FIG. 7 is a 3D laser confocal microscopy image of the surface of each negative electrode according to one embodiment and comparative example of the present invention, wherein (a) of FIG. 7 is a 3D laser confocal microscopy image of the surface of the negative electrode of Embodiment 1, (b) of FIG. 7 is a 3D laser confocal microscopy image of the surface of the negative electrode of Comparative Example 1, and (c) of FIG. 7 is a 3D laser confocal microscopy image of the surface of the negative electrode of Comparative Example 2.

Specifically, the negative electrodes to be measured for roughness were prepared in a suitable size. At this time, three or more samples of the same electrode were prepared to ensure the reliability of the data and to check for roughness deviations. These samples were attached to the slide glass using double-sided tape to keep them from wrinkling. The slide glass with the prepared samples was then placed on the measurement stage, and focused, and the roughness was measured.

[Table 2]

| | Sa (μm) | Sz (μm) |
| --- | --- | --- |
| Embodiment 1 | 0.07 | 0.92 |

(continued)

|  | Sa (μm) | Sz (μm) |
|---|---|---|
| Comparative example 1 | 0.13 | 1.13 |
| Comparative example 2 | 0.18 | 1.52 |
| * Sa: Arithmetic mean roughness of the surface, Sz: Maximum height roughness of the surface | | |

[Embodiment 5, Comparative Examples 4 to 6] Preparation of an all-solid-state lithium ion secondary battery

A positive electrode loaded with 5.5 mAh/cm$^2$ of positive electrode active material was used as the positive electrode, each of the negative electrodes prepared in Embodiment 1 and Comparative Examples 1 to 3 was used as the negative electrode, and a sulfide-based solid electrolyte was used as the electrolyte to produce the pouch-type monocell of Embodiment 5 and Comparative Examples 4 to 6.

[Experimental Example 5] Evaluation of the characteristics of a battery

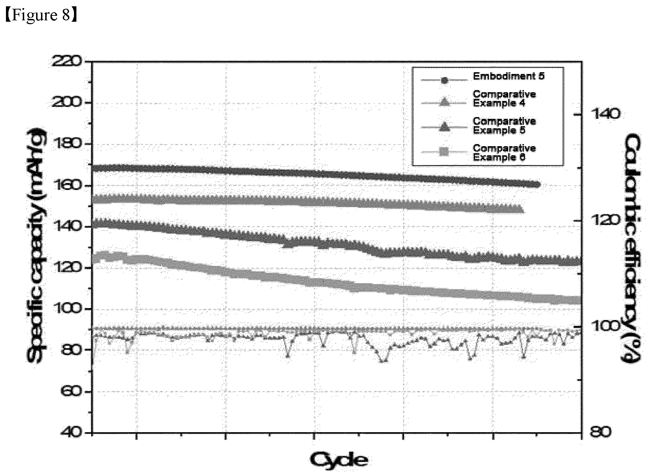

The pouch-type monocells of Embodiment 5 and Comparative Examples 4 to 6 were operated under the following charge and discharge conditions at an operating voltage range of 4.25 V to 3.0 V and an operating temperature of 60 °C to evaluate the cycle characteristics, and the results are shown in FIG. 8.

-    Charging conditions: 0.33C, 4.25V CC/CV, 0.1C cut-off
-    Discharge condition: 0.33C, 3.0V, CC

FIG. 8 is a graph showing the performance of batteries according to one embodiment and comparative examples of the present invention. The cycling characteristics were evaluated for the pouch-type monocells of Embodiment 5 and Comparative Examples 4 to 6, and as shown in FIG. 8, the battery of Embodiment 5 with a negative electrode having a mixture of two types of carbon materials exhibited higher cycling characteristics than those of Comparative Examples 4 and 5 with a negative electrode having only one carbon material. Thus, it can be seen that when the carbon material with a relatively large particle size and the carbon material with a relatively small particle size are applied to the negative electrode together, the contact area of the negative electrode and the solid electrolyte layer is increased, and the performance of the battery is improved.

Furthermore, the battery of Embodiment 5 with a negative electrode comprising an amorphous carbon black with an average particle size of 40 nm and an amorphous carbon black with an average particle size of 80 nm exhibited higher cycling characteristics than the battery of Comparative Example 6 with a negative electrode comprising a mixture of an amorphous carbon black with an average particle size of 120 nm and an amorphous carbon black with an average particle size of 200 nm. Thus, it can be seen that even if a carbon material with a relatively large particle size and a carbon material with a relatively small particle size are applied together to the negative electrode, the performance of the battery decreases when the average particle size exceeds the level of tens of nanometers.

**Claims**

1.    An all-solid-state lithium ion secondary battery comprising a positive electrode, a solid electrolyte layer, a negative electrode current collector, and a negative electrode active material layer disposed between the solid electrolyte layer and the negative electrode current collector,

    wherein the negative electrode active material layer comprises a first carbon material; a second carbon material; and Ag,
    wherein the first carbon material and the second carbon material have different average particle sizes.

2.    The all-solid-state lithium ion secondary battery according to claim 1, wherein the average particle size ratio of the first carbon material to the second carbon material is 1 : 1.2 to 4.

3.    The all-solid-state lithium ion secondary battery according to claim 1, wherein the first carbon material has an average particle size of 5 nm or more and less than 50 nm, and the second carbon material has an average particle size of 50 nm or more and 90 nm or less.

4. The all-solid-state lithium ion secondary battery according to claim 3, wherein the first carbon material has an average particle size of 25 nm to 45 nm, and the second carbon material has an average particle size of 60 nm to 85 nm.

5. The all-solid-state lithium ion secondary battery according to claim 1, wherein the average particle size difference between the first carbon material and the second carbon material is 10 to 50 nm.

6. The all-solid-state lithium ion secondary battery according to claim 1, wherein the negative electrode active material layer does not include a carbon material having an average particle size of 100 nm or more.

7. The all-solid-state lithium ion secondary battery according to claim 1, wherein the first carbon material and the second carbon material each independently comprise at least one of point-like particles having an aspect ratio of 1 to 2 and linear particles having an aspect ratio greater than 2.

8. The all-solid-state lithium ion secondary battery according to claim 7, wherein the first carbon material and the second carbon material are point-like particles having an aspect ratio of 1 to 2.

9. The all-solid-state lithium ion secondary battery according to claim 2, wherein the content ratio of the first carbon material and the second carbon material is 2 : 8 to 8 : 2 by weight.

10. The all-solid-state lithium ion secondary battery according to claim 2, wherein the negative electrode active material layer comprises a first negative electrode active material layer comprising a first carbon material and Ag; and a second negative electrode active material layer comprising a first carbon material, a second carbon material, and Ag, wherein the first negative electrode active material layer among the first negative electrode active material layer and second negative electrode active material layer is in contact with a solid electrolyte layer.

11. The all-solid-state lithium ion secondary battery according to claim 10, wherein the first negative electrode active material layer and the second negative electrode active material layer have a thickness ratio of 1 : 5 to 1 : 10.

12. The all-solid-state lithium ion secondary battery according to claim 1, wherein the first carbon material and the second carbon material are homogeneous or heterogeneous.

13. The all-solid-state lithium ion secondary battery according to claim 1, wherein the first carbon material and the second carbon material are each amorphous carbon.

14. The all-solid-state lithium ion secondary battery according to claim 12, wherein the first carbon material and the second carbon material are each independently selected from the group consisting of amorphous carbon black, amorphous acetylene black, amorphous furnace black, amorphous ketjen black, amorphous activated carbon, amorphous graphene, and combinations thereof.

【Figure 1】

【Figure 2】

【Figure 3】

(a)                                    (b)

【Figure 4】

(a)                                    (b)

【Figure 5】

【Figure 6】

(a)　　　　　　　　　　　　　(b)

【Figure 7】

(a)

(b)

(c)

【Figure 8】

## INTERNATIONAL SEARCH REPORT

| International application No. |
|---|
| **PCT/KR2023/017507** |

**A.    CLASSIFICATION OF SUBJECT MATTER**

**H01M 4/36**(2006.01)i; **H01M 4/587**(2010.01)i; **H01M 4/38**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); H01M 10/052(2010.01); H01M 10/0525(2010.01); H01M 4/02(2006.01); H01M 4/04(2006.01); H01M 4/13(2010.01); H01M 4/133(2010.01); H01M 4/1393(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체(all-solid), 리튬 이차전지(lithium secondary battery), 음극(anode), 탄소재 (carbon material), 은(silver)

**C.    DOCUMENTS CONSIDERED TO BE RELEVANT**

| Category* | Citation of document, with indication, where appropriate, of the relevant passages | Relevant to claim No. |
|---|---|---|
| Y | EP 3869584 A1 (SAMSUNG ELECTRONICS CO., LTD.) 25 August 2021 (2021-08-25)<br>See claims 1, 4-5 and 9; and paragraph [0033]. | 1-14 |
| Y | KR 10-2013-0108816 A (SAMSUNG SDI CO., LTD.) 07 October 2013 (2013-10-07)<br>See claims 1-2, 4 and 6-8; and paragraphs [0054] and [0076]. | 1-14 |
| A | KR 10-2021-0105286 A (SAMSUNG ELECTRONICS CO., LTD.) 26 August 2021 (2021-08-26)<br>See entire document. | 1-14 |
| A | KR 10-2022-0020533 A (HYUNDAI MOTOR COMPANY et al.) 21 February 2022 (2022-02-21)<br>See entire document. | 1-14 |
| A | JP 2007-220451 A (MATSUSHITA ELECTRIC IND. CO., LTD.) 30 August 2007 (2007-08-30)<br>See entire document. | 1-14 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 February 2024** | **06 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | | | | International application No. |
| | | | | **PCT/KR2023/017507** |

| Patent document cited in search report | | | Publication date (day/month/year) | Patent family member(s) | | | Publication date (day/month/year) |
|---|---|---|---|---|---|---|---|
| EP | 3869584 | A1 | 25 August 2021 | US | 11777076 | B2 | 03 October 2023 |
| | | | | US | 2021-0257606 | A1 | 19 August 2021 |
| KR | 10-2013-0108816 | A | 07 October 2013 | US | 2013-0248772 | A1 | 26 September 2013 |
| KR | 10-2021-0105286 | A | 26 August 2021 | CN | 113346124 | A | 03 September 2021 |
| | | | | JP | 2021-132033 | A | 09 September 2021 |
| KR | 10-2022-0020533 | A | 21 February 2022 | CN | 114079087 | A | 22 February 2022 |
| | | | | US | 2022-0052343 | A1 | 17 February 2022 |
| JP | 2007-220451 | A | 30 August 2007 | | None | | |

Form PCT/ISA/210 (patent family annex) (July 2022)

**EP 4 567 922 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220146309

- KR 1020230150694